# EUROPÄISCHE PATENTSCHRIFT

(11) **EP 3 076 129 B1**
(45) Veröffentlichungstag und Bekanntmachung des Hinweises auf die Patenterteilung: **04.11.2020**
(21) Anmeldenummer: 16162914.2
(22) Anmeldetag: 30.03.2016
(51) Int. Cl.: G01C 21/32

(54) **BEREITSTELLEN VON ZUSATZLANDKARTENDATEN FÜR EINE OFFROAD-STRECKE MIT EINER NAVIGATIONSEINRICHTUNG**
PROVIDING ADDITIONAL MAP DATA FOR AN OFFROAD PATH WITH A NAVIGATION DEVICE
PRÉPARATION DE DONNÉES CARTOGRAPHIQUES SUPPLÉMENTAIRES POUR UN ITINÉRAIRE HORS ROUTE À L'AIDE D'UN SYSTÈME DE NAVIGATION

(30) Priorität: 30.03.2015 DE 102015004067
(43) Veröffentlichungstag der Anmeldung: 05.10.2016
(73) Patentinhaber: JOYNEXT GmbH, 01156 Dresden (DE)
(72) Erfinder: Kolanko, Jan, 01157 Dresden (DE); Günther, Andreas, 01159 Dresden (DE); Kaffka, Konrad, 01159 Dresden (DE); Münzner, Christian, 01309 Dresden (DE)

(56) Entgegenhaltungen:
- EP-A2- 1 530 025
- DE-A1-102010 029 073
- JP-A- 2000 088 595
- US-A- 4 982 332
- US-A1- 2009 210 147

## Beschreibung

Die Erfindung betrifft ein Verfahren zum Bereitstellen von Zusatzlandkartendaten für eine Offroad-Strecke mit einer Navigationseinrichtung und eine Navigationseinrichtung zum Ausführen des Verfahrens.

Unter einer Navigationseinrichtung ist hierin eine Vorrichtung zu verstehen, die einem Nutzer Informationen über eine Position der Navigationseinrichtung bereitstellt. Die Position der Navigationseinrichtung wird meist unter Verwendung eines Satellitennavigationssystems bestimmt, zum Beispiel unter Verwendung von GPS, GLONASS, COMPASS oder GALILEO. Ferner ist unter einer Navigationseinrichtung hierin eine Vorrichtung zu verstehen, mit der ein Nutzer eine Route, zum Beispiel von einem ersten Ort zu einem zweiten Ort, berechnen und eine Zielführung, zum Beispiel von dem ersten Ort zu dem zweiten Ort, ausgeben lassen kann. Als Zielführung wird ein Prozess bezeichnet, der den Nutzer entlang der Route leitet. Ein Ort kann hierin durch eine geografische Position, nachfolgend Geoposition genannt, repräsentiert werden.

Die Routenberechnung und die Zielführung werden im Folgenden jeweils als Navigationsvorgang bezeichnet.

Darüber hinaus kann die Navigationseinrichtung in der Lage sein, eine routenbezogene Information auszugeben, zum Beispiel eine Warnmeldung vor einer scharfen Kurve, vor einer schwer einsehbaren Kreuzung oder vor einem starken Gefälle. Eine routenbezogene Information kann zudem einen Hinweis auf einen interessanten Ort (engl.: Point of Interest, POI), insbesondere auf einen Ort, der für einen bestimmten Nutzer interessant ist, enthalten. An einem solchen Ort befindet sich beispielsweise eine bevorzugter Platz zum Angeln, ein Objekt, zum Beispiel eine Raufe, ein Hochstand oder ein Schacht, oder eine Untiefe in einem Gewässer.

Die Navigationseinrichtung unterstützt den Nutzer, zum Beispiel beim Führen eines Fahrzeugs oder bei der Fortbewegung in einem unbekannten und/oder unübersichtlichen Gebiet, indem sie Hinweise zum Erreichen einer Zielposition ausgibt, zum Beispiel optisch oder akustisch über eine Ausgabe- und Bedieneinheit. Somit kann eine Gefahrensituation, in der der Nutzer sich und/oder Dritte aufgrund abrupter Fahrmanöver bringt, verhindert werden.

Die Navigationseinrichtung ist zudem eingerichtet, Informationen zu einer verbleibenden Strecke zu einer Zielposition anzuzeigen, Verkehrsinformationen zu berücksichtigen und/oder eine Ausweichroute oder eine den Interessen des Nutzers entsprechende Alternativroute anzubieten.

Unter einem Fahrzeug ist hierin ein mobiles Verkehrsmittel zu verstehen, zum Beispiel ein Kraftfahrzeug oder ein Fahrrad, aber auch ein Luftfahrzeug oder ein Wasserfahrzeug.

Der Navigationsvorgang ist auf Landkartendaten gestützt, wobei die Landkartendaten raumbezogene Objekte und diesen zugeordnete Informationen repräsentieren, zum Beispiel Straßen, Wege, Gebäude, Plätze, Eisenbahnlinien, Flüsse, Brücken, Parkmöglichkeiten, Raststätten, Verkehrsregelungen, Geschwindigkeitsbegrenzungen, Geländeformen, Landesgrenzen und Ortschaften. Diese Objekte und Informationen können mit Hilfe eines Zeichensystems auf der Ausgabe- und Bedieneinheit, zum Beispiel auf einem berührungsempfindlichen Bildschirm, dargestellt werden. Auf diese Weise werden die realen räumlichen Verhältnisse für den Nutzer der Navigationseinrichtung, der den Bildschirm betrachtet, verständlich gemacht.

Die Landkartendaten repräsentieren unter anderem eine Mehrzahl von Straßen und Wegen, wobei auch die Straßen nachfolgend als "Wege" bezeichnet werden, und sind in einer Landkartendatenbank gespeichert. Die Wege bilden ein Wegenetz, zum Beispiel das gesamte öffentliche Straßennetz der Bundesrepublik Deutschland, ohne jedoch auf durch ein Kraftfahrzeug befahrbare Straßen beschränkt zu sein. Vielmehr können auch Radwanderwege, Fußwanderwege, Skiwanderwege, Schifffahrtswege und Forstwege digital modelliert und als Landkartendaten in der Landkartendatenbank bzw. in einer eigenständigen Landkartendatenbank gespeichert werden.

Die Landkartendaten werden in der Regel durch Kartendatenhersteller unter Verwendung von Spezialtechnik erzeugt, zum Beispiel mit Fahrzeugen, welche mit aufwendiger Mess- und Aufnahmetechnik ausgestattet sind. Die realen Wege werden zunächst aufgenommen. Die dabei gewonnenen Daten werden aufbereitet und einer Plausibilitätsprüfung unterzogen. Ferner werden die Daten zu Landkartendaten kompiliert, wobei abhängig vom Kartendatenhersteller und dem anvisierten Verwendungszweck bzw. Kundenkreis verschiedene Anforderungen und Parameter zu beachten sind.

Das Erstellen von Landkartendaten ist somit ein zeitaufwendiger und kostenintensiver Prozess.

Wird ein neuer Weg freigegeben, indem zum Beispiel eine neue Straße geöffnet wird oder eine lange bestehende Baustelle beseitigt wird, vergeht abhängig vom Kartendatenhersteller eine gewisse Zeit, typischerweise ein Jahr, bis für diesen Weg Landkartendaten erstellt und der Öffentlichkeit zugänglich gemacht sind. Erst wenn die neuen Landkartendaten in die Landkartendatenbank der Navigationseinrichtung übernommen wurden, lässt sich mit der Navigationseinrichtung ein Navigationsvorgang für den neuen Weg ausführen.

Wird die Navigationseinrichtung auf dem neuen Weg bewegt, wenn für diesen noch keine Landkartendaten vorliegen, findet die Bewegung außerhalb des Wegenetzes statt, das von den Landkartendaten repräsentiert wird, die in der Navigationseinrichtung gespeichert sind.

Die Navigationseinrichtung wird in diesem Fall abseits des Wegenetzes, im sogenannten "Offroad", auf einer der Navigationseinrichtung unbekannten sogenannten "Offroad-Strecke" bewegt.

Demnach ist unter einer "Offroad-Strecke" hierin eine Strecke zu verstehen, die von einer Navigationseinrichtung außerhalb des Wegenetzes zurückgelegt wird, das von den in der Navigationseinrichtung gespeicherten Landkartendaten repräsentiert wird.

Um mit einer Navigationseinrichtung einen Navigationsvorgang auf einer Offroad-Strecke ausführen zu können, zum Beispiel auf einem neuen Weg, müssen zunächst zusätzliche Landkartendaten in die Landkartendatenbank der Navigationseinrichtung aufgenommen werden. Dies kann zum Beispiel durch Aktualisieren der Landkartendatenbank geschehen.

Das Aktualisieren der Landkartendatenbank, auch "Karten-Update" genannt, ist meist sehr kostspielig und wird deshalb von vielen Nutzern von Navigationseinrichtungen nicht oder lediglich sporadisch vorgenommen. Daher verwenden viele Navigationseinrichtungen veraltete Landkartendatenbanken, was zu dem Problem führt, dass diese Navigationseinrichtungen eine Route berechnen können, welche nicht optimal ist, zum Beispiel eine fehlerhafte Route, die auf einem gesperrten Weg verläuft.

Ferner können viele bekannte Navigationseinrichtungen keinerlei unterstützende Fahranweisungen zu einer Bewegung außerhalb des Wegenetzes liefern.

Einige herkömmliche Navigationseinrichtungen bieten Alternativen zum Aktualisieren einer Landkartendatenbank an. Bekannt ist zum Beispiel ein sogenannter Wegpunktmodus, in welchem auf Grundlage einer Bewegung einer Navigationseinrichtung eine Folge von Wegpunkten aufgezeichnet wird, die miteinander verbunden sind. Unter einem Wegpunkt ist eine über das Satellitennavigationssystem ermittelte Geoposition zu verstehen, die mit Datum und Uhrzeit in der Navigationseinrichtung gespeichert wird. Nachteil des Wegpunktmodus ist, dass für einen Navigationsvorgang die Wegpunkte nur in der Reihenfolge abgefahren werden können, in welcher sie in der Navigationseinrichtung gespeichert sind. Das Berechnen einer Alternativroute oder das selbstständige Umfahren eines Hindernisses ist mit dem Wegpunktmodus nicht möglich.

Eine weitere bekannte Alternative zum Bezug aktueller Landkartendaten ist das Ermitteln und Aufzeichnen einer geometrischen Streckenbeschreibung durch eine Navigationseinrichtung. Dabei werden bei einer Bewegung der Navigationseinrichtung im Offroad Geopositionen der zurückgelegten Strecke gespeichert. Aufbauend auf den gespeicherten Geopositionen können eine Routenberechnung und eine Zielführung ausgeführt werden. Nachteil bei diesem Verfahren ist, dass keine Bewertung der aufgezeichneten Geopositionen hinsichtlich ihrer Qualität stattfindet, so dass eine Routenberechnung und eine Zielführung auf nicht validierte Daten gestützt sind.

Außerdem ist es bekannt, dass eine Navigationseinrichtung Daten zu einer Offroad-Strecke von einer externen Speichereinheit übernimmt, zum Beispiel von einer Speichereinheit, die für ein soziales Medium (engl.: Social Medium) verwendet wird. Nachteil bei diesem Verfahren ist, dass ein Nutzer der Navigationseinrichtung, bevor diese die Daten verwenden kann, sich mit der Qualität der Daten, dem Format der Daten, dem Übertragen der Daten auf die Navigationseinrichtung und womöglich mit rechtlichen Sachverhalten bezüglich der Daten auseinandersetzen muss. Die JP 2000 088595 A offenbart das Ergänzen von Kartendaten durch wiederholt durchfahrene Trajektorien eines Fahrzeugs.

Die Aufgabe der Erfindung besteht darin, mit einer Navigationseinrichtung Landkartendaten bereitzustellen, mit denen sich ein Navigationsvorgang auf einer Offroad-Strecke fehlerfrei ausführen lässt.

Die Aufgabe wird mit dem erfindungsgemäßen Verfahren zum Bereitstellen von Zusatzlandkartendaten mit einer Navigationseinrichtung gelöst. Die Navigationseinrichtung verfügt über eine Landkartendatenbank mit Landkartendaten, die mehrere Wege repräsentieren, eine Verlaufsdatenbank und eine Zusatzlandkartendatenbank.

Das erfindungsgemäße Verfahren umfasst die Schritte nach Anspruch 1.

Mit dem erfindungsgemäßen Verfahren lassen sich Zusatzlandkartendaten für eine Offroad-Strecke bereitstellen. Dazu werden beim Bewegen der Navigationseinrichtung auf der Offroad-Strecke Verlaufsdaten aufgezeichnet. Ferner wird anhand der Verlaufsdaten geprüft, ob der Verlauf eines zurückgelegten Streckenabschnitts mit dem Verlauf eines anderen Streckenabschnitts, der in der Vergangenheit zurückgelegt wurde, im Wesentlichen übereinstimmt. In diesem Fall werden unter Verwendung der Verlaufsdaten Zusatzlandkartendaten, welche den identifizierten Streckenabschnitt repräsentieren, erzeugt.

Die Zusatzlandkartendaten werden in der Zusatzlandkartendatenbank gespeichert, so dass sie für einen mit der Navigationseinrichtung ausführbaren Navigationsvorgang bereitstehen.

Die Zusatzlandkartendaten werden somit für einen Streckenabschnitt gespeichert, für welchen bereits Verlaufsdaten vorlagen, zum Beispiel aus einer früheren Bewegung der Navigationseinrichtung auf diesem Streckenabschnitt. Folglich wird geprüft, ob redundante Verlaufsdaten für den Streckenabschnitt vorliegen, womit die Verlaufsdaten einer Plausibilitätsprüfung unterzogen werden. Deshalb zeichnen sich die auf Basis der Verlaufsdaten erzeugten Zusatzlandkartendaten durch eine besonders hohe Zuverlässigkeit aus. Das führt dazu, dass ein unter Verwendung der Zusatzlandkarten auf der Offroad-Strecke ausführbarer Navigationsvorgang fehlerfrei, d.h. korrekt, ist.

Bei einer Ausführungsform der Erfindung ist der identifizierte Streckenabschnitt mit einem der Wege direkt oder ausschließlich über identifizierte Streckenabschnitte verbunden.

Bei einer anderen Ausführungsform der Erfindung ist die Navigationseinrichtung in der Lage, weitere Zusatzlandkartendaten, welche einen weiteren außerhalb der Wege angeordneten Streckenabschnitt repräsentieren, von einer anderen Navigationseinrichtung oder von einem Server zu empfangen und die empfangenen Zusatzlandkartendaten in der Zusatzlandkartendatenbank zu speichern, so dass die empfangenen Zusatzlandkartendaten mit den Zusatzlandkartendaten, welche den identifizierten Streckenabschnitt repräsentieren, verknüpft werden.

Bei noch einer anderen Ausführungsform der Erfindung ist die Navigationseinrichtung in der Lage, vor dem Identifizieren eines der Streckenabschnitte weitere Verlaufsdaten, welche den Verlauf eines weiteren außerhalb der Wege angeordneten Streckenabschnitts repräsentieren, von einer anderen Navigationseinrichtung oder von einem Server zu empfangen und die empfangenen Verlaufsdaten in der Verlaufsdatenbank zu speichern.

Bei einer weiteren Ausführungsform der Erfindung wird der Verlauf eines Streckenabschnitts dann als mit dem Verlauf eines anderen Streckenabschnitts im Wesentlichen als übereinstimmend betrachtet, wenn sich die Verlaufsdaten beider Streckenabschnitte gleichen, der Abstand beider Streckenabschnitte entlang eines der Streckenabschnitte einen vorgegebenen Abstandswert nicht überschreitet oder der durchschnittliche Abstand beider Streckenabschnitte entlang eines der Streckenabschnitte einen vorgegebenen Abstandsdurchschnittswert nicht überschreitet. Weisen die Verlaufsdaten lediglich diskrete Geopositionen auf, so können diese interpoliert werden, um einen Streckenabschnitt abzubilden und anhand der genannten Kriterien zu bewerten.

Bei noch einer anderen Ausführungsform der Erfindung werden die Zusatzlandkartendaten, welche den identifizierten Streckenabschnitt repräsentieren, bei ihrer Speicherung mit in der Zusatzlandkartendatenbank gespeicherten Zusatzlandkartendaten verknüpft, die einen weiteren identifizierten Streckenabschnitt repräsentieren, oder mit in der Landkartendatenbank gespeicherten Landkartendaten verknüpft werden, die einen Weg repräsentieren.

Bei noch einer weiteren Ausführungsform der Erfindung wird einer der Wege auf einer Ausgabe- und Bedieneinheit der Navigationseinrichtung als eine Linie dargestellt und einer der identifizierten Streckenabschnitte wird auf der Ausgabe- und Bedieneinheit als eine andere Linie dargestellt, wobei die Breite einer der Linien von der Breite der anderen Linie abweicht, die Farbe einer der Linien von der Farbe der anderen Linie abweicht oder eine der Linien als durchgezogene Linie dargestellt wird, während die andere Linie als unterbrochene Linie dargestellt wird.

Bei noch einer weiteren Ausführungsform der Erfindung wird unter Verwendung der Zusatzlandkartendaten eine Fahranweisung generiert.

Bei noch einer weiteren Ausführungsform der Erfindung wird eine auf einem der Wege basierende Fahranweisung unter Verwendung einer Sprecherstimme akustisch ausgegeben und eine auf einem der identifizierten Streckenabschnitte basierende Fahranweisung wird unter Verwendung einer anderen Sprecherstimme akustisch ausgegeben.

Die Aufgabe wird außerdem mit einer Navigationseinrichtung zum Bereitstellen von Zusatzlandkartendaten gemäß Anspruch 9 gelöst.

Die Erfindung wird nun Bezug nehmend auf die folgenden Figuren näher erläutert:
Figur 1 zeigt ein Blockschema einer Navigationseinrichtung gemäß einer Ausführungsform der Erfindung.
Figur 2 zeigt eine Draufsicht auf Wege und Offroad-Strecken zum Erläutern einer Ausführungsform des erfindungsgemäßen Verfahrens.
Figur 3 zeigt ein Ablaufschema einer Ausführungsform des erfindungsgemäßen Verfahrens.
Figur 4 zeigt eine schematische Darstellung einer Routenberechnung gemäß einer Ausführungsform des erfindungsgemäßen Verfahrens.

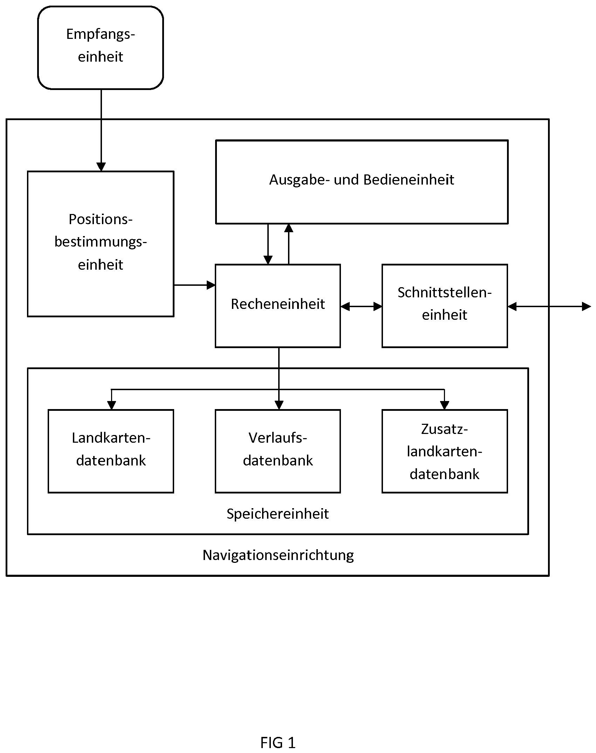

Im Folgenden wird die Erfindung Bezug nehmend auf **Figur 1** näher erläutert, welche ein Blockschema einer Navigationseinrichtung gemäß einer Ausführungsform der Erfindung zeigt.

Die Navigationseinrichtung weist die folgenden Funktionsmodule auf: eine Empfangseinheit, eine Positionsbestimmungseinheit, eine Ausgabe- und Bedieneinheit, eine Schnittstelleneinheit, eine Speichereinheit und eine Recheneinheit.

Die Positionsbestimmungseinheit ist als ein GPS-Empfänger ausgebildet, welcher mit der Empfangseinheit verbunden ist, die in Form einer GPS-Antenne vorliegt. Die Positionsbestimmungseinheit kann eine Geoposition, welche von geografischen Koordinaten der Navigationseinrichtung repräsentiert wird, aus Satellitensignalen gewinnen, welche mittels der Empfangseinheit empfangen werden, und die Geoposition an die Recheneinheit übermitteln.

Bei einer Ausführungsform der Erfindung wird anstelle des GPS-Empfängers eine andere Art von Positionsbestimmungseinheit verwendet, zum Beispiel ein GALILEO-Empfänger, der mit einer entsprechend ausgestalteten Empfangseinheit ausgestattet ist.

Bei einer anderen Ausführungsform der Erfindung kann die Positionsbestimmungseinheit örtlich getrennt von der Navigationseinrichtung vorliegen, zum Beispiel als separates Modul oder als Bestandteil einer anderen Funktionseinheit oder Funktionseinrichtung. In diesem Fall kann die Positionsbestimmungseinheit über die Schnittstelleneinheit mit der Recheneinheit gekoppelt sein, zum Beispiel über eine drahtlose Datenverbindung.

Die Ausgabe- und Bedieneinheit weist einen Berührungsbildschirm, ein Tastenfeld, eine Sprachausgabeeinrichtung mit einem Lautsprecher und eine Spracheingabeeinrichtung mit einem Mikrofon auf. Unter dem Begriff "Tastenfeld" ist hierin eine Mehrzahl von mechanischen Bedienelementen zu verstehen, zum Beispiel Tasten, Schalter oder Drehregler. Die Ausgabe- und Bedieneinheit dient unter anderem zum Ausgeben von Umgebungsinformationen, Routeninformationen und Fahranweisungen an einen Nutzer der Navigationseinrichtung und zum Eingeben von Bedienbefehlen und Zielen durch den Nutzer.

Die Speichereinheit verfügt über einen nichtflüchtigen Speicher in Form eines EEPROMs (Electrically Erasable Programmable Read-Only Memory). Alternativ dazu kann die Speichereinheit auch eine andere Speicherform aufweisen, zum Beispiel einen Flash-EEPROM oder eine Festplatte. Ferner kann die Speichereinheit über mehrere der genannten Speicher verfügen.

In der Speichereinheit ist eine Landkartendatenbank gespeichert, welche eine Mehrzahl von Landkartendaten enthält. Die Landkartendaten repräsentieren Objekte, die sich in einem bestimmten geografischen Gebiet befinden. Zu den Objekten zählen Straßen, Wege, Gebäude, Plätze, Eisenbahnlinien, Flüsse, Brücken, Geländeformen, Landesgrenzen, Ortschaften, Parkmöglichkeiten, Raststätten, Verkehrsregelungen und Geschwindigkeitsbegrenzungen.

Insbesondere repräsentieren die Landkartendaten Wege. Ein solcher Weg wird in den Landkartendaten von einem oder mehreren Links dargestellt. Unter einem Link ist hierin ein digitalisierter kreuzungsfreier Streckenabschnitt zu verstehen. Jeder Link weist zwei Knoten, auch Endpunkte genannt, auf. Ein solcher Endpunkt kann auf einer Kreuzung liegen oder einen Eigenschaftswechsel repräsentieren, zum Beispiel einen sich ändernden Straßennamen.

In der Speichereinheit ist neben der Landkartenbank auch eine Verlaufsdatenbank gespeichert, welche eine Mehrzahl von Verlaufsdaten aufnehmen kann.

Die Verlaufsdaten repräsentieren Streckenabschnitte, auf denen die Navigationseinrichtung außerhalb der Wege bewegt wurde, die von den in der Landkartendatenbank gespeicherten Landkartendaten repräsentiert werden. Die Verlaufsdaten weisen Geopositionen auf.

Bei einer anderen Ausführungsform der Erfindung weisen die Verlaufsdaten zusätzliche Informationen auf, zum Beispiel eine Fahrtstrecke, eine Fahrgeschwindigkeit, eine Fahrtdauer, eine Höhe, einen Höhenverlauf oder einen Abstand zu einem Objekt, welches sich neben einem Streckenabschnitt befindet.

Die Verlaufsdaten beschreiben einen Streckenabschnitt anhand von Geopositionen, die zum Beispiel zwischen einem Ein-/Austrittpunkt aus dem in der Landkartendatenbank abgebildeten Wegenetz und einer im Offroad befindlichen Zielposition angeordnet sind.

In der Speichereinheit ist außerdem eine Zusatzlandkartendatenbank gespeichert, welche eine Mehrzahl von Zusatzlandkartendaten aufnehmen kann. Die Zusatzlandkartendaten repräsentieren Wege, die nicht in der Landkartendatenbank abgebildet sind. Die Zusatzlandkartendaten weisen, wie die Landkartendaten, Links auf und sind mit den Landkartendaten kompatibel. Die in der Zusatzlandkartendatenbank gespeicherten Zusatzlandkartendaten sind für einen mit der Navigationseinrichtung ausführbaren Navigationsvorgang verwendbar.

Die Recheneinheit ist die zentrale Steuereinheit der Navigationseinrichtung. Sie verfügt neben einem Prozessor (Central Processing Unit, CPU) über einen Arbeitsspeicher (Random Access Memory, RAM), welcher zum flüchtigen Speichern von Variablen und Zwischenergebnissen dient. Der Prozessor und der Arbeitsspeicher sind auf einem integrierten Schaltkreis vereinigt. Alternativ dazu können der Prozessor und der Arbeitsspeicher separat voneinander angeordnet sein, zum Beispiel jeweils auf einem anderen integrierten Schaltkreis.

Die Recheneinheit ist zum Identifizieren eines Streckenabschnitts, auf dem die Navigationseinrichtung bewegt wurde, dessen Verlauf mit dem Verlauf eines anderen Streckenabschnitts im Wesentlichen übereinstimmt, auf dem die Navigationseinrichtung ebenfalls bewegt wurde, eingerichtet. Dafür verwendet die Recheneinheit Verlaufsdaten, die beim Bewegen der Navigationseinrichtung auf den genannten Streckenabschnitten in der Verlaufsdatenbank gespeichert wurden. Zusätzlich ist die Recheneinheit zum Erzeugen von Zusatzlandkartendaten, welche den identifizierten Streckenabschnitt repräsentieren, unter Verwendung der Verlaufsdaten eingerichtet.

Die Recheneinheit ist mit der Schnittstelleneinheit verbunden, welche unter anderem zum Empfangen von Landkartendaten, Verlaufsdaten und/oder Zusatzlandkartendaten von außerhalb der Navigationseinrichtung und zum Übertragen der genannten Daten über die Recheneinheit in die Speichereinheit dient. Die Landkarten-, Verlaufs- und/oder Zusatzlandkartendaten werden über eine drahtgebundene Datenverbindung oder eine drahtlose Datenverbindung von einer externen Vorrichtung an die Navigationseinrichtung gesendet, zum Beispiel über ein Mobilfunknetz oder über Rundfunk.

Alternativ können die Landkarten-, Verlaufs- und/oder Zusatzlandkartendaten von einem Speichermedium, zum Beispiel von einer Speicherkarte, in die Speichereinheit übertragen werden. Dazu kann das Speichermedium in die Navigationseinrichtung eingesteckt werden.

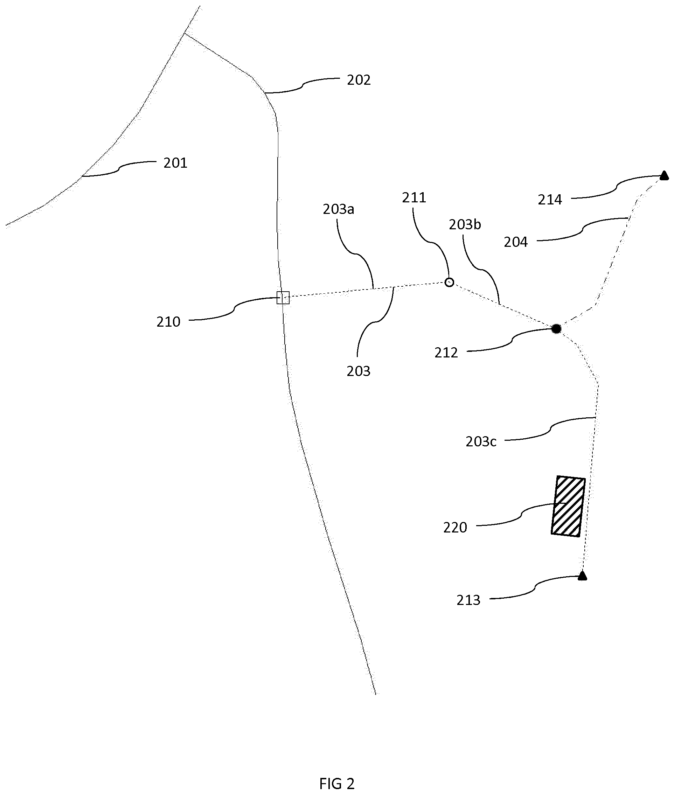

Im Folgenden wird die Erfindung Bezug nehmend auf **Figur 2** näher erläutert, welche eine Draufsicht auf Wege und Offroad-Strecken zum Erläutern einer Ausführungsform des erfindungsgemäßen Verfahrens zeigt.

Dargestellt sind zwei Wege 201, 202, zum Beispiel zwei Kraftfahrstraßen, die in der Landkartendatenbank in Form von Landkartendaten abgebildet sind. Mit anderen Worten liegen die Wege 201, 202 im Wegenetz.

Weiterhin sind eine erste Offroad-Strecke 203 mit einer Zielposition 213 und eine zweite Offroad-Strecke mit einer Zielposition 214, welche jeweils in einem Ein-/Austrittpunkt 210 beginnen, dargestellt. Bei der ersten Offroad-Strecke 203 und der zweiten Offroad-Strecke 204 handelt es sich zum Beispiel um zwei Forstwege, die jeweils zu einer Raufe führen. Die erste Offroad-Strecke 203 weist außerdem drei Streckenabschnitte 203a, 203b und 203c auf.

Die Streckenabschnitte 203a, 203b werden begrenzt durch einen Ein-/Austrittspunkt 210 und einen Knoten 212. Der Ein-/Austrittspunkt 210 repräsentiert eine Geoposition, an welcher die Navigationseinrichtung aus dem Wegenetz heraus ins Offroad bewegt wird. Alternativ kann der Ein-/Austrittspunkt 210 eine Geoposition repräsentieren, an welcher die Navigationseinrichtung aus dem Offroad in das Wegenetz hinein bewegt wird. Der Knoten 212 repräsentiert eine Geoposition, an welcher die erste Offroad-Strecke 203 und die zweite Offroad-Strecke 204 zusammentreffen.

Die Streckenabschnitte 203a, 203b werden durch einen Stützpunkt 211 verbunden. Ein solcher Stützpunkt repräsentiert eine Geoposition, an welcher sich eine Eigenschaft einer Offroad-Strecke verändert, zum Beispiel eine Richtung.

Am Streckenabschnitt 203c liegt ein Objekt 220, zum Beispiel ein Gebäude.

Im vorliegenden Fall wurde die Navigationseinrichtung auf der ersten Offroad-Strecke 203 vom Ein-/Austrittspunkt 210 zur Zielposition 213 bewegt. Dabei wurden Verlaufsdaten gespeichert, welche den Verlauf der Streckenabschnitte 203a, 203b und 203c repräsentieren.

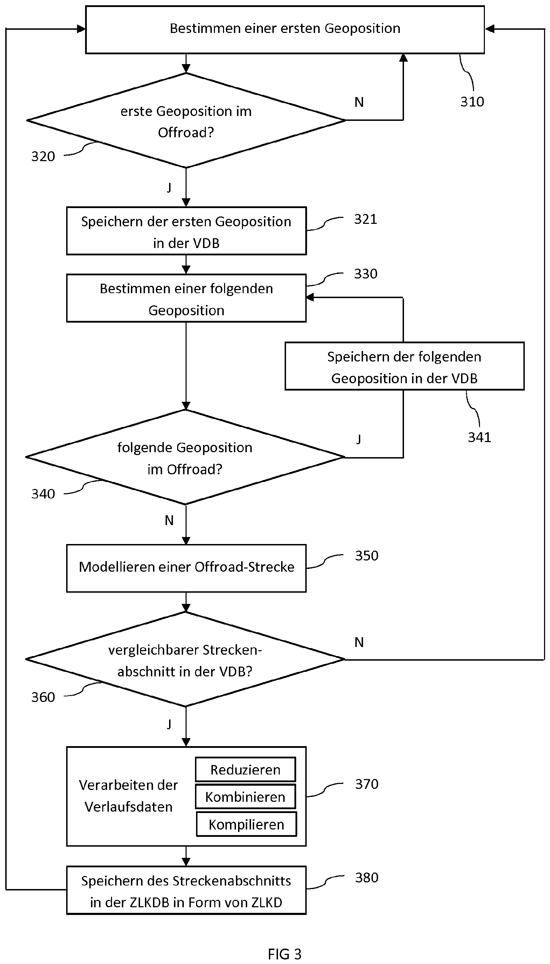

Im Folgenden wird die Erfindung Bezug nehmend auf **Figur 3** näher beschrieben, welche eine Positionserfassung gemäß einer Ausführungsform des erfindungsgemäßen Verfahrens in Form eines Ablaufschemas darstellt. Das Verfahren wird unter Verwendung der in Figur 1 gezeigten Navigationseinrichtung und der in Figur 2 gezeigten Draufsicht ausgeführt.

Bei einem ersten Verfahrensschritt 310 wird unter Verwendung der Positionsbestimmungseinheit eine erste Geoposition 211 der Navigationseinrichtung ermittelt. Dazu wird fortlaufend eine Geoposition festgestellt, an der sich die Navigationseinrichtung zum jeweiligen Zeitpunkt befindet. Die Feststellung findet stetig in einem gleichen Zeitabstand statt, zum Beispiel einmal pro Sekunde.

Alternativ kann die Feststellung einer Geoposition in variablen Zeitabständen ausgeführt werden. Die Dauer eines variablen Zeitabstands kann von einer Bewegungsgeschwindigkeit der Navigationseinrichtung abhängig sein. So kann bei niedriger Bewegungsgeschwindigkeit ein kleiner Zeitabstand gewählt werden, um möglichst viele Geopositionen zu erfassen, wenn ein Nutzer der Navigationseinrichtung sich in einem unbekannten Gebiet vortastet.

In einem zweiten Verfahrensschritt 320 wird unter Verwendung der Recheneinheit geprüft, ob die festgestellte erste Geoposition 211 im Offroad angeordnet ist. Mit anderen Worten wird geprüft, ob die Navigationseinrichtung ins Offroad bewegt wurde. Dazu wird unter Verwendung der Landkartendaten analysiert, ob die erste Geoposition 211 auf dem Wegenetz liegt.

Wenn die Prüfung ergeben würde, dass die erste Geoposition 211 auf dem Wegenetz liegt, wird mit dem Bestimmen einer neuen ersten Geoposition gemäß Verfahrensschritt 310 fortgefahren.

Da die Prüfung ergibt, dass die erste Geoposition 211 im Offroad liegt, wird, wie in Verfahrensschritt 321 gezeigt, die erste Geoposition 211 in der Verlaufsdatenbank (VDB) gespeichert.

Bei einer Ausführungsform der Erfindung werden weitere, der ersten Geoposition zugeordnete Zusatzinformationen festgestellt und in der Verlaufsdatenbank gespeichert. Eine Zusatzinformation kann eine Bewegungsgeschwindigkeit an der ersten Geoposition oder eine Häufigkeit sein, die angibt, wie oft die Navigationseinrichtung bereits an die erste Geoposition bewegt wurde.

Bei einer anderen Ausführungsform der Erfindung werden weitere Informationen, bezogen auf einen Streckenabschnitt zwischen dem Ein-/Austrittpunkt und der ersten Geoposition, festgestellt und in der Verlaufsdatenbank gespeichert. Die weiteren Informationen können eine Fahrtstrecke, eine Fahrtdauer und einen Höhenverlauf des Streckenabschnitts, auf dem die Navigationseinrichtung bewegt wird, aufweisen. Ferner können Informationen erfasst werden, die zum Beispiel einen Abstand zu einem Objekt angeben, welches den Streckenabschnitt seitlich begrenzt, und in der Verlaufsdatenbank gespeichert werden.

Bei einem dritten Verfahrensschritt 330 wird unter Verwendung der Positionsbestimmungseinheit eine folgende Geoposition 212 der Navigationseinrichtung festgestellt, welche der ersten Geoposition 211 folgt.

Bei einem vierten Verfahrensschritt 340 wird unter Verwendung der Recheneinheit geprüft, ob die folgende Geoposition 212 im Offroad liegt. Mit anderen Worten wird geprüft, ob die Navigationseinrichtung im Offroad weiterbewegt wurde. Dazu wird unter Verwendung der Landkartendaten analysiert, ob die folgende Geoposition 212 auf dem Wegenetz liegt.

Da die Prüfung ergibt, dass die folgende Geoposition 212 im Offroad angeordnet ist, liegt eine Bewegung im Offroad vor. Somit wird, wie in Verfahrensschritt 341 gezeigt, die folgende Geoposition 212 in der Verlaufsdatenbank gespeichert.

Bei einer Ausführungsform der Erfindung werden weitere, der folgenden Geoposition zugeordnete Zusatzinformationen festgestellt und in der Verlaufsdatenbank gespeichert, zum Beispiel eine Bewegungsgeschwindigkeit an der folgenden Geoposition.

Bei einer anderen Ausführungsform der Erfindung werden weitere Informationen, bezogen auf einen Streckenabschnitt zwischen der ersten Geoposition und der folgenden Geoposition, festgestellt und in der Verlaufsdatenbank gespeichert. Die weiteren Informationen können eine Fahrtstrecke, eine Fahrtdauer und einen Höhenverlauf des Streckenabschnitts, auf dem die Navigationseinrichtung bewegt wird, aufweisen. Ferner können Informationen festgestellt werden, die einen Abstand zu einem Objekt angeben, welches den Streckenabschnitt seitlich begrenzt, und in der Verlaufsdatenbank gespeichert werden.

Nach dem Speichern der folgenden Geoposition 212 in der Verlaufsdatenbank werden die Verfahrensschritte 330 und 340 erneut ausgeführt. Mit anderen Worten wird eine neue folgende Geoposition 214 bestimmt, welche auf die der ersten Geoposition 211 folgenden Geoposition 212 folgt.

Die Verfahrensschritte 330, 340 werden solange wiederholt, bis wie im vorliegenden Fall festgestellt wird, dass die Navigationseinrichtung im Offroad nicht mehr bewegt wird, zum Beispiel wenn eine im Offroad angeordnete Zielposition 214 erreicht wird.

Alternativ können die Verfahrensschritte 330, 340 solange wiederholt werden, bis eine Prüfung für eine ermittelte neue folgende Geoposition ergibt, dass diese auf dem Wegenetz liegt.

Bei einer weiteren Alternative können die Verfahrensschritte 330, 340 solange wiederholt werden, bis eine Prüfung für eine ermittelte neue folgende Geoposition ergibt, dass diese auf einem Weg liegt, der durch in der Zusatzlandkartendatenbank gespeicherte Zusatzlandkartendaten repräsentiert wird.

Bei einer Ausführungsform der Erfindung wird das Feststellen und Speichern weiterer, den folgenden Geopositionen zugeordneter Zusatzinformationen beendet, wenn die Wiederholung der Verfahrensschritte 330, 340 beendet wird. Bei einer anderen Ausführungsform der Erfindung wird das Feststellen und Speichern weiterer Informationen, bezogen auf Streckenabschnitte zwischen den folgenden Geopositionen, beendet, wenn die Wiederholung der Verfahrensschritte 330, 340 beendet wird.

Bei einem fünften Verfahrensschritt 350 werden unter Verwendung der Recheneinheit die im Offroad ermittelten Geopositionen zur Modellierung einer Offroad-Strecke zusammengeführt, welche die Bewegung der Navigationseinrichtung im Offroad wiedergibt. Dazu können die einzelnen festgestellten Geopositionen interpoliert werden. Die im vorliegenden Fall modellierte zweite Offroad-Strecke 204 wird in der Verlaufsdatenbank gespeichert.

Bei einer Ausführungsform der Erfindung fließen die weiteren, den Geopositionen zugeordneten Zusatzinformationen und die weiteren, auf Streckenabschnitte zwischen den Geopositionen bezogenen Informationen in die Modellierung der Offroad-Strecke ein.

Bei einer Ausführungsform der Erfindung werden die Geopositionen nicht modelliert. Der Verlauf eines Streckenabschnitts wird lediglich durch die einzelnen Geopositionen repräsentiert.

Es wäre denkbar, die Verlaufsdaten als Grundlage für das Generieren eines Fahrmanövers im Offroad zu verwenden. Dem steht die Gefahr entgegen, dass die Verlaufsdaten nur das einmalige Bewegen einer Navigationseinrichtung auf einer Offroad-Strecke wiedergeben und somit unter Umständen Fehler aufweisen können. Um den Nutzer der Navigationseinrichtung nicht der Gefahr fehlerhafter Fahrmanöver auszusetzen, werden die Verlaufsdaten nachfolgend erfindungsgemäß bezüglich ihrer Plausibilität geprüft.

Bei einem sechsten Verfahrensschritt 360 wird unter Verwendung der Recheneinheit geprüft, ob der Verlauf eines Streckenabschnitts, dessen Verlaufsdaten in der Verlaufsdatenbank gespeichert sind, mit dem Verlauf eines anderen Streckenabschnitts, dessen Verlaufsdaten in der Verlaufsdatenbank gespeichert sind, im Wesentlichen übereinstimmt. Dabei wird zum Beispiel geprüft, ob Verlaufsdaten in der Verlaufsdatenbank gespeichert sind, die mit den Verlaufsdaten der zweiten Offroad-Strecke 204 übereinstimmen.

Vorzugsweise wird bei der Prüfung nicht die zweite Offroad-Strecke 204 als Ganzes, sondern jeder Streckenabschnitt der zweiten Offroad-Strecke 204 einzeln geprüft. Damit können Streckenabschnitte erkannt werden, die mit einem Streckenabschnitt einer anderen Offroad-Strecke übereinstimmen. Wenn zum Beispiel in einem vorgebbaren Umkreis von einer festgestellten Geoposition der zweiten Offroad-Strecke 204, welche einen zweiten Zeitstempel aufweist, eine andere Geoposition einer ersten Offroad-Strecke 203 festgestellt wird, welche einen ersten Zeitstempel aufweist, werden unter Verwendung der Recheneinheit die Streckenabschnitte, welche die Geopositionen berühren, untersucht.

Im vorliegenden Fall wird ein Vergleich der Geoposition 211 der ersten Offroad-Strecke 203 und der Geoposition der zweiten Offroad-Strecke 204 vorgenommen. Der Vergleich ergibt, dass die Geoposition 211 auf beiden Offroad-Strecken 203, 204 liegt. Die letzte ermittelte Geoposition, die im Wegenetz liegt, war jeweils der Ein-/Austrittspunkt 210. Demnach weisen die erste Offroad-Strecke 203 und die zweiten Offroad-Strecke 204 vom Ein-/Austrittspunkt 210 bis zum Stützpunkt 211 einen gemeinsamen Verlauf auf dem Streckenabschnitt 203a auf.

Bei einer Ausführungsform der Erfindung können weitere Geopositionen der zweiten Offroad-Strecke zwischen dem Ein-/Austrittspunkt und dem Stützpunkt vorliegen. In diesem Fall können die zu vergleichenden Streckenabschnitte feiner gestuft werden, um Abweichungen oder Näherungen der zu vergleichenden Streckenabschnitte besser festzustellen.

Gemäß der Erfindung ist die Navigationseinrichtung in der Lage, vor dem Identifizieren eines der Streckenabschnitte weitere Verlaufsdaten, welche den Verlauf eines weiteren außerhalb der Wege angeordneten Streckenabschnitts repräsentieren, von einer anderen Navigationseinrichtung zu empfangen und die empfangenen Verlaufsdaten in der Verlaufsdatenbank zu speichern. Damit wird die Anzahl von Verlaufsdaten erhöht, die für den Vergleich mit der zweiten Offroad-Strecke zur Verfügung stehen.

Wenn die Prüfung ergeben würde, dass die zweite Offroad-Strecke 204 nicht mit der ersten Offroad-Strecke 203 übereinstimmt, wird mit dem Bestimmen einer neuen ersten Geoposition gemäß Verfahrensschritt 310 fortgefahren.

Im vorliegenden Fall ergibt die Prüfung, dass die erste Offroad-Strecke 203 und die zweite Offroad-Stecke 204 übereinstimmende Streckenabschnitte 203a, 203b und jeweils unterschiedliche Streckenabschnitte 203c und 204 aufweisen.

Eine Übereinstimmung liegt vor, wenn der Verlauf des Streckenabschnitts 203a der zweiten Offroad-Strecke 204 dann als mit dem Verlauf eines anderen Streckenabschnitts 203a der ersten Offroad-Strecke 203 im Wesentlichen als übereinstimmend betrachtet wird, wenn sich die Verlaufsdaten beider Streckenabschnitte 203a gleichen, der Abstand beider Streckenabschnitte 203a entlang eines der Streckenabschnitte einen vorgegebenen Abstandswert nicht überschreitet oder der durchschnittliche Abstand beider Streckenabschnitte 203a entlang eines der Streckenabschnitte einen vorgegebenen Abstandsdurchschnittswert nicht überschreitet.

Ein identifizierter Streckenabschnitt kann direkt mit einem Weg verbunden sein oder ausschließlich über identifizierte Streckenabschnitte mit einem Weg verbunden sein. Der Streckenabschnitt 203a ist zum Beispiel direkt mit dem Weg 202 verbunden, wohingegen der Streckenabschnitt 203b ausschließlich über identifizierte Streckenabschnitte, im vorliegenden Fall den Streckenabschnitt 203a, mit einem Weg 202 verbunden ist.

Bei einer Ausführungsform der Erfindung werden die weiteren, den Geopositionen zugeordneten Zusatzinformationen beim Vergleich der Streckenabschnitte berücksichtigt. Bei einer anderen Ausführungsform der Erfindung werden die weiteren Informationen, bezogen auf Streckenabschnitte zwischen den Geopositionen, beim Vergleich der Streckenabschnitte berücksichtigt.

Bei einer weiteren Ausführungsform der Erfindung wird durch den Nutzer vorgegeben, ab wann eine Übereinstimmung vorliegt. Der Nutzer kann einen Radius vorgeben, der den Umkreis definiert, in welchem um eine Geoposition einer zweiten Offroad-Strecke nach Geopositionen einer ersten Offroad-Strecke gesucht wird. Der Nutzer kann ferner eine Obergrenze einer Länge eines Streckenabschnitts festlegen, zum Beispiel 10 Meter. Damit kann vermieden werden, dass ein Streckenabschnitt, der zum Beispiel 100 Meter lang ist, zu viele Merkmale aufweist, so dass ein Vergleich auf Übereinstimmung aufgrund der vielen möglichen Merkmalsausprägungen nicht mehr durchführbar ist.

Bei einem siebten Verfahrensschritt 370 werden die Verlaufsdaten der übereinstimmenden Streckenabschnitte 203a, 203b unter Verwendung der Recheneinheit verarbeitet. Ziel ist das Erzeugen von Zusatzlandkartendaten unter Verwendung der als im Wesentlichen übereinstimmend identifizierten Streckenabschnitte, welche die Landkartendaten ergänzen und geeignet sind, als Basis für ein Generieren eines Fahrmanövers zu dienen. Dabei sollen die Zusatzlandkartendaten derart beschaffen sein, dass sie effizient hinsichtlich Ressourcenbedarf, Rechenzeit und Speicherplatz sind.

Das Verarbeiten der Verlaufsdaten zu Zusatzlandkartendaten weist daher in einem ersten Teilschritt ein Reduzieren des Datenvolumens auf. Zum Beispiel können Geopositionen, die zwischen dem Ein-/Austrittspunkt 210 und dem Stützpunkt 211 liegen, zusammengefasst werden, da die zweite Offroad-Strecke 204 in diesem Bereich keine sich ändernden Eigenschaften aufweist.

Bei einer Ausführungsform der Erfindung werden die weiteren, den Geopositionen zugeordneten Zusatzinformationen, soweit möglich, zusammengefasst. Bei einer anderen Ausführungsform der Erfindung werden die weiteren Informationen, bezogen auf Streckenabschnitte zwischen den Geopositionen, soweit möglich, zusammengefasst.

Das Verarbeiten der Verlaufsdaten zu Zusatzlandkartendaten weist in einem zweiten Teilschritt das Kombinieren zusammengehöriger Streckenabschnitte auf. So werden zum Beispiel der Streckenabschnitt 203a und der Streckenabschnitt 203b zu einem Streckenabschnitt 203ab kombiniert, da sie im Stützpunkt 211 aneinander angrenzen und einen zusammenhängenden Teil der Offroad-Strecke 204 repräsentieren. Der Streckenabschnitt 203ab kann durch einen zu erzeugenden Link repräsentiert werden, der vom Ein-/Austrittspunkt 210 bis zum Knoten 212 verläuft, da auf diesem Streckenabschnitt keine Kreuzung liegt. Der Stützpunkt 211 kann somit eingespart werden.

Das Verarbeiten der Verlaufsdaten zu Zusatzlandkartendaten weist in einem dritten Teilschritt, dem sogenannten Kompilieren, das Erzeugen des Links, welcher den Streckenabschnitt 203ab repräsentiert, auf. Dabei werden die in Form von Verlaufsdaten festgestellten Informationen, zum Beispiel Geopositionen, in Zusatzlandkartendaten übersetzt, die eine Form aufweisen, welche von einer Recheneinheit effizient ausgeführt werden kann, zum Beispiel Maschinencode.

Bei einer Ausführungsform der Erfindung werden die weiteren, den Geopositionen zugeordneten Zusatzinformationen beim Erzeugen des Links berücksichtigt. Bei einer anderen Ausführungsform der Erfindung werden die weiteren Informationen, bezogen auf Streckenabschnitte zwischen den Geopositionen, beim Erzeugen des Links berücksichtigt.

Das Vorgehen gemäß dem erfindungsgemäßen Verfahren weist den Vorteil auf, dass die Zusatzlandkartendaten bezüglich ihrer Plausibilität geprüft wurden, bevor sie als Basis für ein Generieren eines Fahrmanövers dienen. Das Prüfen auf Plausibilität beruht darauf, dass die Navigationseinrichtung mindestens ein weiteres Mal auf einem Streckenabschnitt bewegt werden muss und dieser mit dem Streckenabschnitt der zurückliegenden Bewegung übereinstimmen muss.

Bei einer Ausführungsform der Erfindung wird eine Anzahl vorgegeben, wie oft ein Streckenabschnitt befahren werden muss, bevor Verlaufsdaten verarbeitet werden. Zum Beispiel kann zwischen dem Verfahrensschritt 370 und dem Verfahrensschritt 380 ein Zählschritt (nicht gezeigt) vorgesehen sein, so dass das Verarbeiten der Verlaufsdaten erst ermöglicht wird, wenn der Streckenabschnitt hinreichend oft befahren wurde, d.h. die Navigationseinrichtung hinreichend oft auf dem Streckenabschnitt bewegt wurde. Die Anzahl der notwendigen Befahrungen kann von einem Nutzer vorgegeben werden und zum Beispiel 3, 4, 5 oder 10 betragen.

Bei einem achten Verfahrensschritt 380 werden die Zusatzlandkartendaten gespeichert, so dass die Zusatzlandkartendaten (ZLKD) für einen unter Verwendung der Recheneinheit ausgeführten Navigationsvorgang verwendbar sind. Die Zusatzlandkartendaten werden von den Landkartendaten unabhängig in einer Zusatzlandkartendatenbank (ZLKDB) gespeichert.

Ein Vermischen der von dem Kartendatenhersteller gelieferten Landkartendaten und den selbst aufgezeichneten Zusatzlandkartendaten wird damit vermieden. Die Landkartendaten werden durch die Zusatzlandkartendaten nicht verändert, so dass bei einem möglichen Aktualisieren der Landkartendaten keine Inkonsistenz entsteht.

Die Zusatzlandkartendaten, welche den identifizierten Streckenabschnitt 203ab repräsentieren, werden bei ihrer Speicherung mit in der Zusatzlandkartendatenbank gespeicherten Zusatzlandkartendaten verknüpft, die einen weiteren identifizierten Streckenabschnitt repräsentieren, oder mit in der Landkartendatenbank gespeicherten Landkartendaten verknüpft werden, die einen Weg repräsentieren. Im vorliegenden Fall wird beim Speichern festgestellt, dass der Startpunkt des Streckenabschnitts 203ab auf dem Weg 202 liegt, während der Endpunkt des Streckenabschnitts 203ab jeweils auf den Streckenabschnitten 203c, 204 liegt. Folglich wird der zu erzeugende Link, der den Streckenabschnitt 203ab repräsentiert, am Ein-/Austrittspunkt 210 mit dem Wegenetz verknüpft.

Bei einer Ausführungsform der Erfindung ist die Navigationseinrichtung in der Lage, weitere Zusatzlandkartendaten, welche einen weiteren außerhalb der Wege angeordneten Streckenabschnitt repräsentieren, von einer anderen Navigationseinrichtung oder von einem Server zu empfangen und die empfangenen Zusatzlandkartendaten in der Zusatzlandkartendatenbank zu speichern, so dass die empfangenen Zusatzlandkartendaten mit den Zusatzlandkartendaten, welche den identifizierten Streckenabschnitt repräsentieren, verknüpft werden.

Die in der Zusatzlandkartendatenbank gespeicherten Zusatzlandkartendaten ergänzen das Wegenetz, zum Beispiel um eine neu eröffnete Straße. Wie auch die Landkartendaten stehen die Zusatzlandkartendaten für eine Routenberechnung und/oder eine Zielführung zu einer Zielposition zur Verfügung.

Die Navigationseinrichtung ist in der Lage, unter Verwendung der Recheneinheit das Aufnehmen und das Analysieren von Verlaufsdaten sowie das Verarbeiten von Verlaufsdaten zu Zusatzlandkartendaten in Echtzeit durchzuführen.

Bei einer Ausführungsform der Erfindung werden die Verlaufsdaten erst dann zu Zusatzlandkartendaten verarbeitet, wenn die Navigationseinrichtung für einen bestimmten Zeitabstand nicht mehr bewegt wurde oder wenn eine Zielposition erreicht wurde. Alternativ kann die Navigationseinrichtung eingerichtet sein, die Verarbeitung innerhalb eines regelmäßig wiederkehrenden Zeitfensters durchzuführen, zum Beispiel täglich von 0:00 bis 1:00 Uhr.

Die Navigationseinrichtung ist eingerichtet, die Verlaufsdaten zu Zusatzlandkartendaten zu verarbeiten, ohne dass eine Aktion des Nutzers notwendig ist. Mit anderen Worten verarbeitet die Navigationseinrichtung die Verlaufsdaten automatisch.

Bei einer alternativen Ausführungsform der Erfindung werden die Verlaufsdaten extern, d.h. außerhalb der Navigationseinrichtung zu Zusatzlandkartendaten verarbeitet. Dazu können die Verlaufsdaten eines identifizierten Streckenabschnitts unter Verwendung der Schnittstelleneinheit oder der Kommunikationseinheit (nicht gezeigt) an eine externe Recheneinheit übertragen werden, zum Beispiel an einen Server. Die Verlaufsdaten werden von der externen Recheneinheit zu Zusatzlandkartendaten verarbeitet. Dabei können zusätzlich Verlaufsdaten von einer anderen Navigationseinrichtung, die denselben Streckenabschnitt betreffen, berücksichtigt werden.

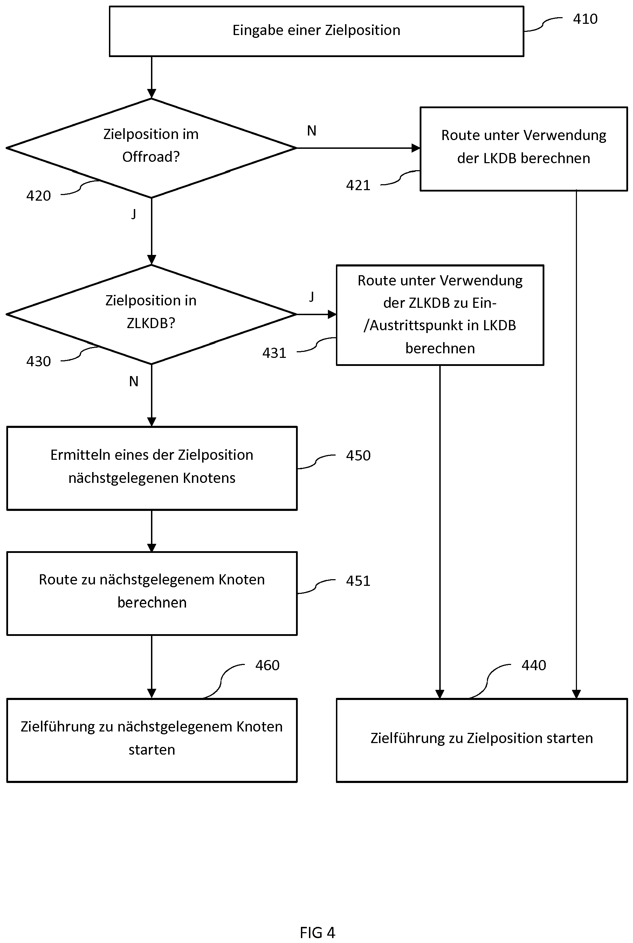

Im Folgenden wird die Erfindung Bezug nehmend auf **Figur 4** näher beschrieben, welche eine Routenberechnung gemäß einer Ausführungsform des erfindungsgemäßen Verfahrens in Form eines Ablaufschemas darstellt. Das Verfahren wird unter Verwendung der in Figur 1 gezeigten Navigationseinrichtung ausgeführt und anhand von Figur 2 erläutert.

Bei einem ersten Verfahrensschritt 410 gibt der Nutzer der Navigationseinrichtung eine Zielposition, zum Beispiel die Zielposition 214, in die Navigationseinrichtung ein.

Bei einem zweiten Verfahrensschritt 420 wird unter Verwendung der Recheneinheit geprüft, ob die Zielposition 214 der zu berechnenden Route im Offroad liegt.

Wenn die Zielposition im Wegenetz liegen würde, wird, wie bei einem Verfahrensschritt 421 gezeigt, unter Verwendung der Recheneinheit eine Route von einer Startposition, zum Beispiel die Geoposition, an welcher die Navigationseinrichtung gegenwärtig angeordnet ist, zu der Zielposition berechnet. Dabei werden die Berechnung der Route und eine spätere Zielführung unter Verwendung der in der Landkartendatenbank (LKDB) gespeicherten Landkartendaten durchgeführt.

Im vorliegenden Fall ist die Zielposition 214 im Offroad angeordnet. Daher wird bei einem dritten Verfahrensschritt 430 unter Verwendung der Recheneinheit geprüft, ob die Zielposition 214 in dem durch die Zusatzlandkartendatenbank (ZLKDB) repräsentierten Wegenetz liegt. Mit anderen Worten wird geprüft, ob in der Zusatzlandkartendatenbank ein Link zu der Zielposition 214 vorliegt.

Wenn in der Zusatzlandkartendatenbank ein Link zu der Zielposition vorliegen würde, wird, wie bei einem Verfahrensschritt 431 gezeigt, unter Verwendung der Recheneinheit eine Route zu der Zielposition berechnet. Die Route würde von einer Startposition, zum Beispiel die Geoposition, an welcher die Navigationseinrichtung gegenwärtig angeordnet ist, bis zu einem Ein-/Austrittspunkt aus dem durch die Landkartendaten repräsentierten Wegenetz unter Verwendung der Landkartendaten und vom Ein-/Austrittspunkt bis zur Zielposition unter Verwendung der Zusatzlandkartendaten berechnet.

Bei einem Verfahrensschritt 440 würde unter Verwendung der Recheneinheit nach dem Berechnen der Route gemäß einem von den Verfahrensschritten 421 oder 431 eine Zielführung zu der Zielposition gestartet.

Im vorliegenden Fall liegt kein Link zu der Zielposition 214 vor. Daher wird, wie bei einem vierten Verfahrensschritt 450 gezeigt, eine Route zu einem der Zielposition 214 nächstgelegenen Knoten berechnet, wobei der Knoten durch Landkartendaten oder Zusatzlandkartendaten repräsentiert werden kann.

Im vorliegenden Fall stellt der in der Zusatzlandkartendatenbank gespeicherte Knoten 212 den der Zielposition 214 nächstgelegenen Punkt dar, zu dem ein Navigationsvorgang ausgeführt werden kann, da ein Link vom Ein-/Austrittspunkt 210 bis zum Knoten 212 vorliegt.

Bei einem fünften Verfahrensschritt 451 wird unter Verwendung der Recheneinheit eine Route zu dem der Zielposition 214 nächstgelegenen Knoten 212 berechnet. Dabei wird die Route von einer Startposition, zum Beispiel die Geoposition, an welcher die Navigationseinrichtung gegenwärtig angeordnet ist, bis zu einem Ein-/Austrittspunkt 210 aus dem durch die Landkartendaten repräsentierten Wegenetz unter Verwendung der Landkartendaten und vom Ein-/Austrittspunkt 210 bis zur Zielposition 214 unter Verwendung der Zusatzlandkartendaten berechnet.

Bei einem sechsten Verfahrensschritt 460 wird unter Verwendung der Recheneinheit eine Zielführung zu dem der Zielposition 214 nächstgelegenen Knoten 212 gestartet.

Die Zielführung, die unter Verwendung von Zusatzlandkartendaten durchgeführt wird, weist die Ausgabe von optischen Fahranweisungen und/oder akustischen Fahranweisungen auf.

Dabei wird bei einer optischen Ausgabe einer der Wege auf der Ausgabe- und Bedieneinheit der Navigationseinrichtung als eine Linie dargestellt und einer der identifizierten Streckenabschnitte auf der Ausgabe- und Bedieneinheit als eine andere Linie dargestellt, wobei die Breite einer der Linien von der Breite der anderen Linie abweicht, die Farbe einer der Linien von der Farbe der anderen Linie abweicht oder eine der Linien als durchgezogene Linie dargestellt wird, während die andere Linie als unterbrochene Linie dargestellt wird. Damit soll dem Nutzer der Navigationseinrichtung signalisiert werden, dass ein Navigationsvorgang auf einer anderen Datenquelle als der Landkartendatenbank beruht.

Die Navigationseinrichtung ist in der Lage, unter Verwendung der Zusatzlandkartendaten eine Fahranweisung zu generieren. Dabei wird eine auf einem der Wege basierende Fahranweisung unter Verwendung einer Sprecherstimme akustisch ausgegeben und eine auf einem der identifizierten Streckenabschnitte basierende Fahranweisung wird unter Verwendung einer anderen Sprecherstimme akustisch ausgegeben. Damit soll dem Nutzer der Navigationseinrichtung signalisiert werden, dass ein Navigationsvorgang auf einer anderen Datenquelle als der Landkartendatenbank beruht.

In einer Ausführungsform der Erfindung weist eine Fahranweisung, die unter Verwendung von Zusatzlandkartendaten generiert wird, andere Ausgaben als eine Fahranweisung auf, die unter Verwendung von Landkartendaten generiert wird. Eine auf einem der Wege basierende Fahranweisung lautet "in 100 Metern links abbiegen", während eine auf einem der identifizierten Streckenabschnitte basierende Fahranweisung hingegen "in ungefähr 100 Metern links abbiegen" lautet. Die Fahranweisung zeigt die Richtung an, in die der Nutzer der Navigationseinrichtung sich bewegen soll, wobei berücksichtigt wird, dass die Informationen, auf denen die Fahranweisung basiert, gegenüber den Landkartendaten mit einem Unsicherheitsfaktor versehen ist.

Bei einer anderen Ausführungsform der Erfindung ist die Navigationseinrichtung unter Verwendung der Recheneinheit in der Lage, zusätzliche Merkmale zu lernen. Wird zum Beispiel ein Kontakt, der in einem mit der Navigationseinrichtung in Verbindung stehenden Mobiltelefon hinterlegt ist, ausgewählt und eine Prüfung durch die Recheneinheit ergibt, dass eine in den Kontaktdaten aufgeführte Adresse bzw. Hausnummer nicht im Wegenetz enthalten ist, wird die Adresse bzw. Hausnummer der zurückgelegten Offroad-Strecke als zusätzliche Information für die Zielposition gespeichert.

Bei noch einer anderen Ausführungsform der Erfindung ist die Navigationseinrichtung unter Verwendung der Recheneinheit in der Lage, nach dem Ende einer Bewegung im Offroad nach den nächstgelegenen Kontakten in einer Kontaktdatenbank, zum Beispiel in einem Mobiltelefon, zu suchen. Der nächstgelegene Kontakt kann mit der Position, bis zu der die Navigationseinrichtung bewegt wurde, assoziiert werden. Führt der Nutzer der Navigationseinrichtung nun erstmalig einen Navigationsvorgang zu seiner Heimatadresse aus, wird ihm die Route einschließlich dem erfassten Offroad-Anteil und einer korrekten Zeiteinschätzung angeboten.

In noch einer weiteren Ausführungsform der Erfindung ist die Navigationseinrichtung in der Lage, unter Verwendung der Recheneinheit und der Schnittstelleneinheit die in der Zusatzlandkartendatenbank gespeicherten Zusatzlandkartendaten anderen elektronischen Geräten verfügbar zu machen. Die Zusatzlandkartendaten können zum Beispiel drahtlos mit einer anderen Navigationseinrichtung ausgetauscht werden, zum Beispiel über ein Mobilfunknetz oder mittels Bluetooth und/oder ein drahtloses lokales Netzwerk (wireless local area network, WLAN).

In noch einer weiteren Ausführungsform der Erfindung ist die Navigationseinrichtung in der Lage, Zusatzlandkartendaten einer anderen Navigationseinrichtung zu empfangen, speichern und für einen Navigationsvorgang zu verwenden. Die Navigationseinrichtung kann, wie oben erläutert, Verlaufsdaten verarbeiten und damit die Zusatzlandkartendaten, die in einer anderen Navigationseinrichtung erzeugt wurden, mit eigenen Zusatzlandkartendaten erweitern. Die erweiterte Zusatzlandkartendatenbank kann unter Verwendung der Schnittstelleneinheit einer weiteren Navigationseinrichtung zur Verfügung gestellt werden.

## Patentansprüche

1. Verfahren zum Betreiben einer ersten Navigationseinrichtung, welche eine Landkartendatenbank mit Landkartendaten, die mehrere Wege (201, 202) repräsentieren, eine Verlaufsdatenbank und eine Zusatzlandkartendatenbank aufweist, mit den folgenden Schritten:
• Bewegen der ersten Navigationseinrichtung auf mehreren Streckenabschnitten (203a, 203b, 203c, 204) außerhalb der Wege (201, 202), wobei Verlaufsdaten, welche den Verlauf der Streckenabschnitte (203a, 203b, 203c, 204) repräsentieren, in der Verlaufsdatenbank gespeichert werden,
• Empfangen weiterer Verlaufsdaten, welche den Verlauf eines weiteren außerhalb der Wege angeordneten Streckenabschnitts repräsentieren, von einer zweiten Navigationseinrichtung, und Speichern der empfangenen Verlaufsdaten in der Verlaufsdatenbank,
• Identifizieren eines der Streckenabschnitte, dessen Verlauf mit dem Verlauf eines anderen der Streckenabschnitte im Wesentlichen übereinstimmt, mittels einer Recheneinheit der ersten Navigationseinrichtung unter Verwendung der Verlaufsdaten,
• Erzeugen von Zusatzlandkartendaten, welche den identifizierten Streckenabschnitt repräsentieren, mittels der Recheneinheit unter Verwendung der Verlaufsdaten, und
• Speichern der Zusatzlandkartendaten in der Zusatzlandkartendatenbank, so dass die Zusatzlandkartendaten für einen mit der ersten Navigationseinrichtung ausführbaren Navigationsvorgang verwendbar sind.

2. Verfahren gemäß Anspruch 1,
bei dem der identifizierte Streckenabschnitt (203a) mit einem der Wege (202) direkt verbunden ist oder ausschließlich über identifizierte Streckenabschnitte (203a) verbunden ist.

3. Verfahren gemäß Anspruch 1 oder 2,
bei dem die erste Navigationseinrichtung weitere Zusatzlandkartendaten, welche einen weiteren außerhalb der Wege angeordneten Streckenabschnitt repräsentieren, von einer anderen Navigationseinrichtung oder von einem Server empfängt und die empfangenen Zusatzlandkartendaten in der Zusatzlandkartendatenbank speichert, so dass die empfangenen Zusatzlandkartendaten mit den Zusatzlandkartendaten, welche den identifizierten Streckenabschnitt repräsentieren, verknüpft werden.

4. Verfahren gemäß einem der vorhergehenden Ansprüche,
bei dem der Verlauf eines Streckenabschnitts (203a, 203b) dann als mit dem Verlauf eines anderen Streckenabschnitts (203a, 203b) im Wesentlichen als übereinstimmend betrachtet wird, wenn sich die Verlaufsdaten beider Streckenabschnitte gleichen, der Abstand beider Streckenabschnitte entlang eines der Streckenabschnitte einen vorgegebenen Abstandswert nicht überschreitet oder der durchschnittliche Abstand beider Streckenabschnitte entlang eines der Streckenabschnitte einen vorgegebenen Abstandsdurchschnittswert nicht überschreitet.

5. Verfahren gemäß einem der vorhergehenden Ansprüche,
bei dem die Zusatzlandkartendaten, welche den identifizierten Streckenabschnitt (203a, 203b) repräsentieren, bei ihrer Speicherung mit in der Zusatzlandkartendatenbank gespeicherten Zusatzlandkartendaten verknüpft werden, die einen weiteren identifizierten Streckenabschnitt (203a, 203b) repräsentieren, oder mit in der Landkartendatenbank gespeicherten Landkartendaten verknüpft werden, die einen Weg (201, 202) repräsentieren.

6. Verfahren gemäß einem der vorhergehenden Ansprüche,
bei dem einer der Wege (201, 202) auf einer Ausgabe- und Bedieneinheit der ersten Navigationseinrichtung als eine Linie dargestellt wird und einer der identifizierten Streckenabschnitte (203a, 203b) auf der Ausgabe- und Bedieneinheit als eine andere Linie dargestellt wird, wobei die Breite einer der Linien von der Breite der anderen Linie abweicht, die Farbe einer der Linien von der Farbe der anderen Linie abweicht oder eine der Linien als durchgezogene Linie dargestellt wird, während die andere Linie als unterbrochene Linie dargestellt wird.

7. Verfahren gemäß einem der vorhergehenden Ansprüche,
bei dem unter Verwendung der Zusatzlandkartendaten eine Fahranweisung generiert wird.

8. Verfahren gemäß einem der vorhergehenden Ansprüche,
bei dem eine auf einem der Wege (201, 202) basierende Fahranweisung unter Verwendung einer Sprecherstimme akustisch ausgegeben wird und eine auf einem der identifizierten Streckenabschnitte (203a, 203b) basierende Fahranweisung unter Verwendung einer anderen Sprecherstimme akustisch ausgegeben wird.

9. Navigationseinrichtung, welche eine Recheneinheit, eine Landkartendatenbank mit Landkartendaten, die mehrere Wege (201, 202) repräsentieren, eine Verlaufsdatenbank und eine Zusatzlandkartendatenbank aufweist, wobei
• die Verlaufsdatenbank zum Speichern von Verlaufsdaten, welche den Verlauf mehrerer außerhalb der Wege (201, 202) angeordneter Streckenabschnitte (203a, 203b, 203c, 204) repräsentieren, auf denen die Navigationseinrichtung bewegt wird, und Speichern weiterer Verlaufsdaten, welche von der Navigationseinrichtung von einer anderen Navigationseinrichtung empfangen werden und den Verlauf eines weiteren außerhalb der Wege angeordneten Streckenabschnitts repräsentieren, eingerichtet ist,
• die Recheneinheit zum Identifizieren eines der Streckenabschnitte, dessen Verlauf mit dem Verlauf eines anderen der Streckenabschnitte im Wesentlichen übereinstimmt, unter Verwendung der Verlaufsdaten und zum Erzeugen von Zusatzlandkartendaten, welche den identifizierten Streckenabschnitt repräsentieren, unter Verwendung der Verlaufsdaten eingerichtet ist und
• die Zusatzlandkartendatenbank zum Speichern der Zusatzlandkartendaten, so dass die Zusatzlandkartendaten für einen mit der Navigationseinrichtung ausführbaren Navigationsvorgang verwendbar sind, eingerichtet ist.

## Claims

1. Method for operating a first navigation device, which comprises a map database with map data representing multiple roads (201, 202), a course database, and an additional map database, with the following steps:
• moving the navigation device on multiple route sections (203a, 203b, 203c, 204) outside of the roads (201, 202) whereby course data which represent the course of the route sections (203a, 203b, 203c, 204) are stored in the course database,
• receiving other course data which represent the course of another route section disposed outside of the roads from a second navigation device, and storing the received course data in the course database,
• identifying one of the route sections whereby the course of the route section essentially corresponds with the course of another of the route sections by means of a computing unit of the first navigation device by using the course data,
• generating additional map data which represent the identified route section by means of the computing unit by using the course data, and
• storing the additional map data in the additional map database so that the additional map data are usable for a navigation procedure performed by means of the first navigation device.

2. Method according to claim 1,
wherein the identified route section (203a) is directly connected with one of the roads (202) or the identified route section (203a) is connected with one of the roads (202) via identified route sections exclusively.

3. Method according to claim 1 or 2,
wherein the first navigation device receives other additional map data which represent another route section disposed outside of the roads from another navigation device or from a server and stores the received additional map data in the additional map database so that the received additional map data are concatenated with the additional map data which represent the identified route section.

4. Method according to one of the preceding claims,
wherein the course of a route section (203a, 203b) is considered to be essentially corresponding with the course of another route section (203a, 203b) if the course data of both route sections equal one another, the distance between both route sections along one of the route sections does not exceed a predetermined distance value, or the average distance between both route sections along one of the route sections does not exceed a predetermined average distance value.

5. Method according to one of the preceding claims,
wherein the additional map data which represent the identified route section (203a, 203b) are during their storing concatenated with additional map data stored in the additional map database which represent another identified route section (203a, 203b), or with map data stored in the map database which represent a road (201, 202).

6. Method according to one of the preceding claims,
wherein one of the roads (201, 202) is displayed as a line on an output and operating unit of the first navigation unit and one of the identified route sections (203a, 203b) is displayed as another line on the output and operating unit, whereby the width of one of the lines differs from the width of the other of the lines, the colour of one of the lines differs from the colour of the other of the lines, or one of the lines is displayed as continuous line whilst the other one of the lines is displayed as broken line.

7. Method according to one of the preceding claims,
wherein a driving instruction is generated by using the additional map data.

8. Method according to one of the preceding claims,
wherein a driving instruction based on one of the roads (201, 202) is output acoustically by using a speaker voice and a driving instruction based on one of the identified route sections (203a, 203b) is output acoustically by using another speaker voice.

9. Navigation device, which comprises a computing unit, a map database with map data representing multiple roads (201, 202), a course database, and an additional map database, wherein
• the course database is arranged for storing course data which represent the course of multiple route sections (203a, 203b, 203c, 204) disposed outside of the roads (201, 202), whereby the navigation device is moved on the route sections (203a, 203b, 203c, 204), and for storing other course data which are received by the navigation device from another navigation device and represent the course of another route section disposed outside of the roads,
• the computing unit is arranged for identifying one of the route sections by using the course data, whereby the course of the route section essentially corresponds with the course of another of the route sections, and for generating additional map data which represent the identified route section by using the course data, and
• the additional map database is arranged for storing the additional map data so that the additional map data are usable for a navigation procedure performed by means of the first navigation device.

## Revendications

1. Procédé d'exploitation d'un premier dispositif de navigation comportant une base de données géographiques représentant plusieurs chemins (201, 202), une base de données de cheminement et une base de données géographiques supplémentaires, le procédé étant constitué des étapes suivantes :
• déplacement du premier dispositif de navigation sur plusieurs tronçons d'itinéraire (203a, 203b, 203c, 204) situés à l'extérieur des chemins (201, 202), des données de cheminement représentant le cheminement des tronçons d'itinéraire (203a, 203b, 203c, 204) étant enregistrées dans la base de données de cheminement,
• réception d'autres données de cheminement représentant le cheminement d'un autre tronçon d'itinéraire situé à l'extérieur des chemins, envoyées par un deuxième dispositif de navigation, et enregistrement des données de cheminement reçues dans la base de données de cheminement,
• identification d'un des tronçons d'itinéraire dont le cheminement coïncide pour l'essentiel avec celui d'un autre des tronçons d'itinéraire, au moyen d'une unité de calcul du premier dispositif de navigation et des données de cheminement,
• génération de données géographiques supplémentaires représentant le tronçon d'itinéraire identifié, au moyen de l'unité de calcul et des données de cheminement, et
• enregistrement des données géographiques supplémentaires dans la base de données géographiques supplémentaires, de sorte que les données géographiques supplémentaires soient utilisables pour un processus de navigation pouvant être exécuté par le premier dispositif de navigation.

2. Procédé selon la revendication 1,
**caractérisé en ce que** le tronçon d'itinéraire identifié (203a) est directement relié à l'un des chemins (202) ou est exclusivement relié par des tronçons d'itinéraire identifiés (203a).

3. Procédé selon les revendications 1 ou 2,
**caractérisé en ce que** le premier dispositif de navigation reçoit d'autres données géographiques supplémentaires représentant un autre tronçon d'itinéraire situé à l'extérieur des chemins d'un autre dispositif de navigation ou d'un serveur et enregistre les données géographiques supplémentaires reçues dans la base de données géographiques supplémentaires de sorte à lier les données géographiques supplémentaires reçues aux données géographiques supplémentaires représentant le tronçon d'itinéraire identifié.

4. Procédé selon l'une des revendications précédentes,
**caractérisé en ce que** le cheminement d'un tronçon d'itinéraire (203a, 203b) est considéré comme coïncidant pour l'essentiel avec le cheminement d'un autre tronçon d'itinéraire (203a, 203b) si les données de cheminement des deux tronçons d'itinéraire sont identiques, si la distance des deux tronçons d'itinéraire ne dépasse pas une distance définie le long d'un des tronçons d'itinéraire ou si la distance moyenne des deux tronçons d'itinéraire ne dépasse pas une distance moyenne définie le long d'un des tronçons d'itinéraire.

5. Procédé selon l'une des revendications précédentes,
**caractérisé en ce que**, au moment de leur enregistrement, les données géographiques supplémentaires représentant le tronçon d'itinéraire identifié (203a, 203b) sont liées à des données géographiques supplémentaires enregistrées dans la base de données géographiques supplémentaires, représentant un autre tronçon d'itinéraire identifié (203a, 203b), ou sont liées à des données géographiques enregistrées dans la base de données géographiques, représentant un chemin (201, 202).

6. Procédé selon l'une des revendications précédentes,
**caractérisé en ce que** l'un des chemins (201, 202) est représenté par une ligne sur une unité d'affichage et de commande du premier dispositif de navigation et que l'un des tronçons d'itinéraire identifiés (203a, 203b) est représenté par une autre ligne sur l'unité d'affichage et de commande, la largeur de l'une des lignes étant différente de la largeur de l'autre ligne ou la couleur de l'une des lignes étant différente de la couleur de l'autre ligne ou l'une des lignes étant représentée par un trait continu tandis que l'autre ligne est représentée par un trait discontinu.

7. Procédé selon l'une des revendications précédentes,
**caractérisé en ce qu'**une instruction de conduite est générée à partir des données géographiques supplémentaires.

8. Procédé selon l'une des revendications précédentes,
**caractérisé en ce qu'**une instruction de conduite basée sur l'un des chemins (201, 202) est communiquée par une sortie vocale réalisée avec une voix et qu'une instruction de conduite basée sur l'un des tronçons d'itinéraire identifiés (203a, 203b) est communiquée par une sortie vocale réalisée avec une autre voix.

9. Dispositif de navigation comportant une unité de calcul, une base de données géographiques contenant des données géographiques représentant plusieurs chemins (201, 202), une base de données de cheminement et une base de données géographiques supplémentaires,
• la base de données de cheminement étant configurée pour enregistrer des données de cheminement représentant le cheminement de plusieurs tronçons d'itinéraire (203a, 203b, 203c, 204) situés à l'extérieur des chemins (201, 202), sur lesquels le dispositif de navigation est déplacé, et pour enregistrer d'autres données de cheminement que le dispositif de navigation reçoit d'un autre dispositif de navigation et qui représentent le cheminement d'un autre tronçon d'itinéraire situé à l'extérieur des chemins,
• l'unité de calcul étant configurée pour identifier un des tronçons d'itinéraire dont le cheminement coïncide pour l'essentiel avec le cheminement d'un autre des tronçons d'itinéraire sur la base des données de cheminement et pour générer des données géographiques supplémentaires représentant le tronçon d'itinéraire identifié sur la base des données de cheminement, et
• la base de données géographiques supplémentaires étant configurée pour enregistrer les données géographiques supplémentaires de sorte que les données géographiques supplémentaires soient utilisables pour un processus de navigation pouvant être exécuté par le dispositif de navigation.
